Europäisches Patentamt

European Patent Office

Office européen des brevets

(19)

(11) **EP 1 553 139 A1**

(12) **EUROPEAN PATENT APPLICATION**
published in accordance with Art. 158(3) EPC

(43) Date of publication:
**13.07.2005 Bulletin 2005/28**

(51) Int Cl.⁷: **C08L 67/04**

(21) Application number: **03741235.0**

(86) International application number:
**PCT/JP2003/008590**

(22) Date of filing: **07.07.2003**

(87) International publication number:
**WO 2004/005400 (15.01.2004 Gazette 2004/03)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **08.07.2002 JP 2002198829**

(71) Applicant: **MITSUBISHI PLASTICS INC.
Chiyoda-ku, Tokyo 100-0005 (JP)**

(72) Inventor: **EGAWA, Yosuke,
c/o MITSUBISHI PLASTICS, INC.
Nagahama-shi, Shiga 526-8660 (JP)**

(74) Representative: **Albrecht, Thomas, Dr.
Kraus & Weisert,
Thomas-Wimmer-Ring 15
80539 München (DE)**

(54) **BIODEGRADABLE SHEET, MOLDED OBJECT OBTAINED FROM THE SHEET, AND PROCESS FOR PRODUCING THE MOLDED OBJECT**

(57)    A biodegradable sheet that causes no environmental problems, has excellent heat resistance and impact resistance, and is capable of forming deep-drawn molded article and blister molded article having a complicated shape. The biodegradable sheet comprises a resin composition containing 75 to 25 mass% of a polylactic acid resin and 25 to 75 mass% of a polyester having a glass transition temperature of 0°C or less and a melting point higher than the glass transition temperature of the polylactic acid resin based on total 100 mass%, and the polylactic acid resin in the sheet has a degree of crystallization of 45% or less. The method for producing a molded article from the biodegradable sheet includes the step of molding the biodegradable sheet at a temperature not lower than the melting point of the aliphatic polyester and lower than a temperature by 30°C higher than the melting point of the polyester.

Printed by Jouve, 75001 PARIS (FR)

**Description**

CROSS REFERENCE TO RELATED APPLICATION

This application is the U.S. national stage of International Application No.PCT/JP2003/008590, filed July 7 , 2003, which was published under PCT Article 21 (2) as Publication No. WO2004/005400 and of which the instant application claims the benefit, which in turn claims the benefit of Japan Patent Application No.2002-198829, filed July 8,2002. All these applications are incorporated herein by reference in their entirely.

TECHNICAL FIELD

The present invention relates to a biodegradable sheet, biodegradable molded article, and a method for producing the molded article. More particularly, the present invention relates to a biodegradable sheet and biodegradable molded article having heat resistance and impact resistance, and a method for producing the molded article.

BACKGROUND ART

Polyethylene, polypropylene, polyvinyl chloride, polystyrene, polyethylene terephthalate and the like have been used as materials for food containers such as cups and trays, blister packs, hot-fill containers and trays and carrier tapes for transporting electronic parts. The food containers and the like made of these plastic materials are in many cases thrown away after one use. Therefore, there arises a problem of their disposal after they are used and discarded. Resins such as polyethylene, polypropylene, polystyrene and the like generate much heat when they are burned, so that there is the fear that they will damage the furnace during they are burned. Polyvinyl chloride generates noxious gases during burning. In addition, ordinary plastics are stable for a long period of time in natural environment and has low bulk density, so that they will make landfill sites for reclamation of wastes short-lived, break natural landscape or break environment in which marine organisms live.

Accordingly, research and development of materials that will be degraded and disappear with time under natural environment are being made extensively. Biodegradable materials attract attention as such materials. One of them is polylactic acid. Polylactic acid is gradually disintegrated and decomposed in soil or water by hydrolysis or biodegradation and finally gives rise to harmless decomposate by the action of microorganisms. Further, polylactic acid generates a small amount of heat when it is burned. Since the starting material is of plant origin, it is advantageous in that one does not have to depend on petroleum resources that is being exhausted.

However, polylactic acid has low heat resistance and therefore it is not suitable as a material for containers that are used at high temperatures such as containers in which food to be heated are included or containers into which hot water is poured. Further, containers made of polylactic acid are sometimes deformed or fused in the inside of a storehouse, or in the inside of a truck or ship during transportation since high temperatures are reached there in summer seasons.

A technology of imparting polylactic acid with heat resistance includes a method of maintaining the temperature of a mold near a crystallization temperature of polylactic acid (80 to 130°C) and highly crystallize polylactic acid in the mold. This method requires a molding cycle that is longer than ordinary and incurs high production costs since the molded article must be retained in the mold until the crystallization is completed. In addition, installation for heating the mold is necessary. On the other hand, it is known to impart polylactic acid with heat resistance by blending the polylactic acid with polyester. However, form of plastic products is diversified and blister packs having a complicated shape or deep-bottomed molded article are needed; conventional polyester-blended polylactic acids are not materials that are satisfactorily adapted for such shapes.

DISCLOSURE OF THE INVENTION

Therefore, in view of the above, it is an object of the present invention to provide a biodegradable sheet that is made of a material causing no environmental problems, has excellent heat resistance and excellent impact resistance, and is capable of forming deep-drawn molded article and blister molded article having a complicated shape. Another object of the present invention is to provide a molded article from the biodegradable sheet and a method for producing the molded article.

To achieve the above-mentioned objects, the biodegradable sheet of the present invention is composed of a resin composition containing a polylactic acid resin and a polyester, wherein the resin composition containing 75 to 25 mass% of the polylactic acid resin and 25 to 75 mass% of the polyester having a glass transition temperature of 0°C or less and a melting point higher than the glass transition temperature of the polylactic acid resin based on total 100 mass%, and wherein the polylactic acid resin in the sheet has a degree of crystallization of 45% or less.

According to another aspect of the present invention , the biodegradable sheet is composed of a resin composition containing a polylactic acid resin and a polyester, wherein the resin composition containing 75 to 25 mass% of the polylactic acid resin and 25 to 75 mass% of the polyester having a glass transition temperature of 0°C or less and a melting point of 90°C or more based on total 100 mass%, and wherein the polylactic acid resin in the sheet has a degree of crystallization of 45% or less.

Here, the degree of crystallization of the polylactic acid resin may be 20% or less.

Further, the polyester may be biodegradable aliphatic polyester other than the polylactic acid resin.

According to a still another aspect of the present invention , the biodegradable sheet is composed of a resin composition containing a polylactic acid resin and a polyester, wherein the resin composition containing 75 to 25 mass% of the polylactic acid resin and 25 to 75 mass% of the polyester having a glass transition temperature of 0°C or less and a melting point higher than the glass transition temperature of the polylactic acid resin based on total 100 mass%, and wherein a molded article molded from the sheet has a volume reduction ratio of 6% or less.

The biodegradable sheet for deep-drawing of the present invention is composed of a resin composition containing a polylactic acid resin and a polyester, wherein the resin composition containing 75 to 25 mass% of the polylactic acid resin and 25 to 75 mass% of the polyester having a glass transition temperature of 0°C or less and a melting point higher than the glass transition temperature of the polylactic acid resin based on total 100 mass%, and wherein the polylactic acid resin in the sheet has a degree of crystallization of 45% or less.

The molded article of the present invention comprises a sheet that is composed of a resin composition containing 75 to 25 mass% of the polylactic acid resin and 25 to 75 mass% of the polyester having a glass transition temperature of 0°C or less and a melting point higher than the glass transition temperature of the polylactic acid resin based on total 100 mass%, and having a volume reduction ratio of 6% or less.

Here, a biodegradable sheet in which the polylactic acid resin in the sheet has a degree of crystallization of 45% or less may be molded at a molded article temperature not lower than a melting point of the polyester and lower than a temperature by 30°C higher than the melting point of the polyester.

According to another aspect of the present invention, the molded article is molded from a biodegradable sheet that is composed of a resin composition containing a polylactic acid resin and a polyester, wherein the resin composition containing 75 to 25 mass% of the polylactic acid resin and 25 to 75 mass% of the polyester having a glass transition temperature of 0°C or less and a melting point higher than the glass transition temperature of the polylactic acid resin based on total 100 mass%, and wherein the polylactic acid resin in the sheet has a degree of crystallization of 45% or less, at a temperature not lower than a melting point of the polyester and lower than a temperature by 30°C higher than the melting point of the polyester, and then post crystallized at a temperature not lower than the glass transition temperature of the polylactic acid resin and lower than the melting point of the polyester, and having a volume reduction ratio of 6% or less.

According to yet another aspect of the present invention, the biodegradable sheet is used for the above-mentioned molded article.

The method for producing a molded article of the present invention comprises forming a molded article from a biodegradable sheet that is composed of a resin composition containing a polylactic acid resin and a polyester, wherein the resin composition containing 75 to 25 mass% of the polylactic acid resin and 25 to 75 mass% of the polyester having a glass transition temperature of 0°C or less and a melting point higher than the glass transition temperature of the polylactic acid resin based on total 100 mass%, and wherein the polylactic acid resin in the sheet has a degree of crystallization of 45% or less, at a temperature not lower than a melting point of the polyester and lower than a temperature by 30°C higher than the melting point of the polyester.

Here, the molded article formed from the biodegradable sheet at the molding temperature may be post-crystallized at a temperature not lower than the glass transition temperature of the polylactic acid resin and lower than the melting point of the polyester.

<u>BEST MODE FOR CARRYING OUT THE INVENTION</u>

Hereinafter, the present invention will be described.

The biodegradable sheet of the present invention comprises a resin composition that contains a polylactic acid resin and a polyester. Here, the polyester must have a glass transition temperature of 0°C or less and have a melting point higher than the glass transition temperature of the polylactic acid resin with which it is blended, and the polylactic acid resin in a formed sheet must have a degree of crystallization of 45% or less. Further, the polylactic acid resin and polyester must be blended in amounts such that 75 to 25 mass% of the polylactic acid resin and 25 to 75 mass% of the polyester are blended, the sum of the resin and the polyester being 100 mass%. If the blending amount of the polylactic acid resin is more than 75 mass%, heat resistance becomes poor and if the blending amount of the polylactic acid resin is less than 25 mass%, the resultant sheet and molded article have poor rigidity.

The polylactic acid resins used in the present invention include poly(L-lactic acid) containing L-lactic acid as a structural unit, poly (D-lactic acid) containing D-lactic acid as a structural unit, a copolymer containing both L-lactic acid and D-lactic acid as structural units, i.e., poly (DL-lactic acid), and mixtures thereof.

In the present invention, to increase heat resistance and for other purposes, small amounts of non-aliphatic dicarboxylic acids such as terephthalic acid, non-aliphatic diols such as ethylene oxide adducts of bisphenol A and so on may be used as copolymerizable components. Further, for the purpose of increasing the molecular weight, small amounts of chain extenders, for example, diisocyanate compounds, epoxy compounds, acid anhydrides and so on may be used.

The polylactic acid resin used in the present invention may be copolymers with other hydroxycarboxylic acids such as $\alpha$-hydroxycarboxylic acid units, or copolymers with aliphatic diols and/or aliphatic dicarboxylic acids.

The other hydroxycarboxylic acid units that are copolymerized with the polylactic acid resin include optical isomers of lactic acid (D-lactic acid for L-lactic acid, L-lactic acid for D-lactic acid), bifunctional aliphatic hydroxycarboxylic acids such as glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid,2-methyllactic acid, and 2-hydroxycarproic acid, and lactones such as caprolactone, butyrolactone, and valerolactone.

The aliphatic diols that are copolymerized with the polylactic acid resin include ethylene glycol, 1,4-butanediol, and 1,4-cyclohexyanedimethanol. Further, the aliphatic dicarboxylic acids include succinic acid, adipic acid, suberic acid, sebacic acid, and dodecanedioic acid.

It is preferable that the polylactic acid resin has a weight average molecular weight in the range of 50,000 to 400,000, more preferably 100,000 to 250,000. If the polylactic acid resin has a weight average molecular weight less than 50,000, practically acceptable physical properties are difficult to obtain and if the polylactic acid resin has a weight average molecular weight of more than 400,000, the melt viscosity may become too high to give acceptable mold processability.

Polymerization methods that can be used for the polylactic acid resin include known methods such as a condensation polymerization method, a ring-opening polymerization method. For example, in the case of condensation polymerization method, direct dehydrocondensation polymerization of L-lactic acid or D-lactic acid or a mixture of these can give rise to polylactic acid resins of any desired compositions.

Further, in the ring-opening polymerization method, a polylactic acid resin may be obtained by polymerizing a lactide, which is a dimer of lactic acid, using a catalyst selected as appropriate, for example, tin octylate while using a polymerization adjusting agent as necessary. Lactides include L-lactide, which is a dimer of L-lactic acid, D-lactide, which is a dimer of D-lactic acid, and DL-lactide, which consists of L-lactic acid and D-lactic acid. These are mixed as necessary and polymerized to obtain polylactic acid resins having any desired compositions and degree of crystallizations.

In the present invention, it is necessary to blend the polylactic acid resin with a specified polyester in order to impart a sheet or molded article thereof with heat resistance, impact resistance and molding processability. The specified polyester has a glass transition temperature of 0°C or less and a melting point higher than the glass transition temperature of the polylactic acid resin with which the polyester is blended. Generally, the glass transition temperature of the polylactic acid resin is 50°C to 60°C. For example, polyesters having a melting point of 90°C or more can exhibit the effect of the present invention. If the glass transition temperature of the polyester is higher than 0°C, the effect of improving impact resistance is unsatisfactory. In consideration of impact resistance, it is preferable that the polyester has a glass transition temperature of -20°C or less. Further, if the melting point of the polyester is not higher than the glass transition temperature of the polylactic acid resin with which the polyester is blended, the resultant sheet and molded article may have unsatisfactory heat resistance.

In the present invention, it is preferable that a biodegradable aliphatic polyester other than the polylactic acid resin be used as a polyester. Examples of the biodegradable aliphatic polyester include polyhydroxycarboxylic acids, aliphatic polyesters obtained by condensation of an aliphatic diol and an aliphatic dicarboxylic acid, aliphatic aromatic polyesters obtained by condensation of an aliphatic diol, an aliphatic dicarboxylic acid and an aromatic dicarboxylic acid, aliphatic polyesters obtained by ring-opening polymerization of a cyclic lactone, synthetic aliphatic polyesters, aliphatic polyesters biosynthesized in microbial cells, and so on.

The polyhydroxycarboxylic acids used herein include homopolymers and copolymers of hydroxycarboxylic acids such as 3-hydroxy-butyric acid, 4-hydroxy-butyric acid, 2-hydroxy-n-butyric acid, 2-hydroxy-3,3-dimethylbutyric acid, 2-hydroxy-3-methylbutyric acid, 2-methyllactic acid, and 2-hydroxycarpoic acid.

Examples of aliphatic diols that are used for aliphatic polyesters or aliphatic aromatic polyesters include ethylene glycol, 1,4-butanediol, 1,4-cyclohexanediemthanol and so on. Further, examples of the above-mentioned aliphatic dicarboxylic acid include succinic acid, adipic acid, suberic acid, sebacic acid, dodecanedioic acid and so on. Examples of the aromatic dicarboxylic acid include terephthalic acid, isophthalic acid and so on.

By selecting one or more compounds from each compound exemplified above as appropriate and performing condensation polymerization, aliphatic polyesters or aliphatic aromatic polyesters can be obtained. Further, the molecular weight of the polyester may be increased by use of isocyanate compounds as necessary to obtain desired polymers.

Aliphatic polyesters obtained by ring-opening polymerization of cyclic lactones can be obtained by polymerization of one or more of cyclic monomers such as ε-caprolactone, δ-valerolactone, β-methyl-δ-valerolactone.

Examples of the synthetic aliphatic polyester include copolymers of a cyclic acid anhydride and an oxirane, for example, succinic acid anhydride and ethylene oxide, propylene oxide or the like.

Examples of the aliphatic polyester biosynthesized in microbial cells include aliphatic polyesters biosynthesized by acetyl coenzyme A (acetyl CoA) in microbial cells of microbes including *Alcaligenes eutrophas.* The aliphatic polyesters biosynthesized in microbial cells is composed mainly of poly(β-hydroxybutyric acid (poly-3HB). However, in order to increase practically useful characteristics as a plastic, it is industrially advantageous to further copolymerize hydroxyvaleric acid (HV) to obtain a copolymer of poly(3HB-CO-3HV). Generally, it is preferable that the copolymerization ratio of HV is 0 to 40 mol%. Further, in place of hydroxyvaleric acid, long chain hydroxyalkanoates such as 3-hydroxyhexanoate, 3-hydroxyocatanoate and 3-hydroxyoctadecanoate may be copolymerized.

Examples of the biodegradable aliphatic polyesters that can be used in the present invention include polybutylenesuccinate,polybutylenesuccinate adipate, polybutylene adipate terephthalate, polyglycolic acid, polyester carbonate,copolymersof polyhydroxybutyrate and polyhydroxyvalerate, and copolymers of polyhydroxybutyrate and polyhydroxyhexanoate. At least one selected from the group consisting of the above-mentioned polyesters is used.

Various modifications may be made to the resin composition of the present invention by addition of auxiliary additives. Examples of the auxiliary additive include heat stabilizers, light stabilizers, antioxidants, ultraviolet absorbents, pigments, colorants, antistatic agents, electroconductingagents, release agents, plasticizers, lubricants, inorganic fillers, fragrances, antimicrobials, nucleating agents and the like.

In the present invention, a sheet can be tolerably formed from a resin composition that contains a blend of a polylactic acid resin and a specified in a predetermined proportion. However, the polylactic acid resin in the sheet must have a degree of crystallization of 45% or less, preferably 20% or less. The sheet in which the polylactic acid resin has a degree of crystallization of more than 45% can be tolerably molded by vacuum forming, air pressure forming, vacuum-air pressure forming, and press forming. However, when deep-drawn molded article having a draw ratio (L/D: L is a depth of molded article, D is an aperture of molded article) of 0.5 or more or a blister molded article having a complicated shape is formed by vacuum forming, formability is poor and no good molded article can be obtained.

Generally used sheet forming method can be used as a method for forming the sheet. For example, mention may be made of extrusion molding by a T-die cast method. However, since the polylactic acid resin is highly hygroscopic and highly hydrolyzable, so that water control during production process is necessary. For example, when extrusion molding is performed using a monoaxial extruder, it is preferable that film forming be performed after dehumidification and drying by a vacuum drier or the like. On the other hand, when extrusion molding is performed using a vent-type biaxial extruder, dehydration effect is high so that efficient film formation is possible. It is also possible to form a multilayer sheet by using a plurality of extruders.

The biodegradable sheet of the present invention can be set to a suitable thickness depending on utility. When a molded article is formed by using the biodegradable sheet of the present invention, a sheet having a thickness that corresponds to a thickness required to a resultant molded article is selected. For example, in the case of trays for foods such as fresh fish, meat and so on, the thickness of the sheet is preferably 100 µm to 500 µm. Note that "sheet" means a product that is thin and flat, and has a thickness that is small as compared with the length and width as defined by JIS. On the other hand, "film means a thin, flat product that has an extremely small thickness as compared with the length and width and a maximum thickness is restricted arbitrarily, usually provided in the form of a roll (JIS K 6900). Therefore, among sheets, those having particularly small thicknesses may be called films. However, there is no clear-cut boundary between "sheet" and "film" and these two are difficult to clearly distinguish one from another. Accordingly, as used herein, "sheet" may include "film" and "film" may include "sheet".

The biodegradable sheet of the present invention is excellent in molding processability and can be molded at a temperature at which no heating of molds is necessary and in a short molding cycle. Hereinafter, the molding method of the present invention will be described.

The biodegradable sheet of the present invention can be molded into a molded article by using a molding method such as vacuum forming, air pressure forming, vacuum-air pressure forming, press forming and so on. In this case, it is preferable that molding be performed at a sheet temperature not lower than the melting point of the polyester that constitutes the biodegradable sheet (Tm1) and lower than a temperature by 30°C higher than the melting point of the polyester (Tm1 + 30°C) . If the molding temperature is lower than the melting point of the polyester (Tm1), heat resistance and molding processability may be unsatisfactory. If the molding temperature is not lower than (Tm1 + 30°C), there will arise the problem of draw down of the sheet upon molding.

In the present invention, it is preferable that the obtained molded article be subjected to post-crystallization treatment. The method of post-crystallization is performed at a temperature not lower than the glass transition temperature of the polylactic acid resin that constitutes the sheet used and lower than the melting point of the polyester that constitutes the sheet used. Post-crystallization may sometimes increase heat resistance. The heat resistance of the molded article before the post-crystallization treatment depends on the melting point of the polyester while the heat resistance of the molded article after the post-crystallization treatment depends on the melting point of the polylactic acid resin. For example, when a polyester having a melting point of 110°C is used, the heat resistance temperature of the molded article before the post-crystallization treatment is 110°C or less while the heat resistance temperature of the molded article after the post-crystallization treatment is elevated near the melting point of the polylactic acid resin. Note that although the melting point of the polylactic acid resin may vary depending on the mixing ratios of L-lactic acid and D-lactic acid as structural units, generally it is about 135°C to about 175°C. If the temperature of post-crystallization is lower than the glass transition temperature of the polylactic acid resin, crystallization of the polylactic acid resin does not proceed substantially. On the other hand, if the temperature of post-crystallization is not lower than the melting point of the polyester, the molded article will be deformed and there arises the problem of precision of dimension. The time required for post-crystallization is not particularly limited and preferably selected depending on the blending proportions as appropriate.

As described above, use of the biodegradable sheet of the present invention enables molded articles to be formed without retaining the mold at a temperature near the crystallization of polylactic acid resin (for example, 80°C to 130°C), that is, at a molding temperature lower than such a temperature and in a short molding cycle. Further, the obtained molded article has excellent heat resistance and excellent impact resistance.

Molded articles of various forms can be formed by using the biodegradable sheet of the present invention. Examples of molded article include lunch boxes, trays or cups for foods such as fresh fish, meat, vegetables, soybean cake, daily dishes, desserts, and convenience food noodles, wrapping containers for tooth brushes, batteries, drugs, cosmetics and so on, hotfill containers for pudding, jam, curry and so on, or trays, carrier tapes and the like for transporting electronic components such as IC, transistors, diodes and so on.

EXAMPLES

Hereinafter, the present invention will be described in detail by examples. However, the present invention should not be considered to be limited to the examples. Measured values and evaluation methods used in the examples and comparative examples are shown below.

(1) Evaluation of heat resistance

Molded articles obtained from biodegradable sheets were subjected to heat treatment at 80°C or 120°C for 20 minutes using an oven with internal air circulation ("FC-610", manufactured by Advantec), and then left to stand to cool to room temperature (23°C ± 2°C). Water at the same temperature as the room temperature was poured into the molded articles after the heat treatment. The amount of water that filled the molded article after the heat treatment was defined as the volume of the molded article after the heat treatment. Separately, water at the same temperature as the room temperature was poured into a molded article that was left to stand at the room temperature without subjecting to heat treatment in the same manner as described above. The amount of water that filled the molded article was defined as the volume of the molded article before the heat treatment. Then, a volume reduction ratio (%) of the molded article was calculated according to the following equation. Note that a volume reduction ratio of below 3% means "excellent", 6% or less means "practically usable range", and above 6% means "unusable".

Volume reduction ratio =

{1 - (volume of molded article after heat

treatment/volume of molded article before heat

treatment)} × 100

(2) Evaluation of impact resistance (1)

Using Hydrostat Impact Tester (Model HTM-1) manufactured by Toyo Seiki Co., Ltd., a percussion hammer having a diameter of 1/2 inch was hit on a biodegradable sheet at a speed of 3 m/sec at a temperature of 23°C and energy required for breakage of the sheet was calculated.

(3) Evaluation of impact resistance (2)

Water was filled into a molded article obtained from a biodegradable sheet through an opening and the opening was sealed. The article was made to fall from a height of 1 m onto a concrete and whether or not damage occurred was examined.

### (4) Glass transition temperature

Glass transition temperature of a polyester was measured according to Japan Industrial Standard JIS-K-7121 by using a differential scanning calorimeter (DSC) at a temperature elevation rate of 10°C/minute.

### (5) Measurement of degree of crystallization

Heat of melting of crystal (ΔHm) and heat of crystallization (ΔHc) ascribable to the polylactic acid resin in the biodegradable sheet or in the molded article were measured according to Japan Industrial Standard JIS-K-7121 by using a differential scanning calorimeter (DSC) at a temperature elevation rate of 10°C/min. and the degree of crystallization (%) of the polylactic acid resin was calculated according to the following equation.

$$\text{Degree of crystallization} = \{(\Delta Hm - \Delta Hc)/[92.8 \times (\text{proportion of polylactic acid resin in sheet})]\} \times 100$$

### (6) Evaluation of moldability (1)

Using a mold having a diameter of 75 mm, a depth of 100 mm and a draw ratio of 1.33 (mold temperature 25°C), vacuum forming (degree of vacuum: -70 cmHg) and mold forming condition of the molded article was observed. Evaluation was performed in four ranks. Evaluation standards are as follows. "◎ " indicates the case where a molded article having an excellent shape was formed, "○" indicates the case where a molded article having a good shape was formed, "Δ" indicates the case where a molded article that was substantially on a practically usable level, and " × " indicates the case where a molded article of unacceptable shape was formed.

### (7) Evaluation of moldability (2)

Using a mold having a diameter of 75 mm, a depth of 37.5 mm and a draw ratio of 0.5 (mold temperature 25°C), vacuum forming (degree of vacuum: -70 cmHg) and mold forming condition of the molded article was observed. Evaluation was performed in four ranks. Evaluation standards are as follows. "◎ " indicates the case where a molded article having an excellent shape was formed, "○" indicates the case where a molded article having a good shape was formed, "Δ" indicates the case where a molded article that was substantially on a practically usable level, and " × " indicates the case where a molded article of unacceptable shape was formed.

### (Example 1)

15 ppm of tin octylate was added to 100 kg of L-Lactide (trade name: PURASORB L) manufactured by Purac Japan Co. and the resultant was charged in a 500-L batch type polymerization tank equipped with a stirrer and a heater. The tank was purged with nitrogen and polymerization was performed at 185°C for 60 minutes at an agitation speed of 100 rpm. The obtained melt was fed to a 40 mmφ unidirectional biaxial extruder equipped with 3 stages of vacuum vent manufactured by Mitsubishi Heavy Industries, Ltd. , and extruded at 200°C into a strand and pelletized while removing volatiles at a vent pressure of 4 Torr. The obtained polylactic acid resin had a weight average molecular weight of 200,000 and a L-form content of 99.5%. The resin had a melting point by DSC of 171°C and a glass transition temperature of 58°C.

The obtained polylactic acid resin and a polybutyrene succinate ("Bionolle 1903", trade name, manufactured by Showa Highpolymer Co., Ltd., melting point: 110°C, glass transition temperature: -40°C) as a biodegradable aliphatic polyester, were mixed in proportions of polylactic acid resin/biodegradable aliphatic polyester = 70 mass%/30 mass%. The resultant was fed to a unidirectional biaxial extruder, melt-kneaded and extruded into a strand, and then cut by a pelletizer to obtain pellets. Subsequently, the obtained pellets were dried at 70°C for 8 hours, fed to a monoaxial extruder, and extruded through a T-die to obtain a 400 μm-thick biodegradable sheet. The polylactic acid resin of the obtained biodegradable sheet had a degree of crystallization of 11%.

Then, a molded article was formed using the obtained biodegradable sheet. That is, using a mold having a diameter of 75 mm and a depth of 100 mm (a draw ratio of 1.33) (mold temperature 25°C), vacuum forming was performed under the conditions of a sheet temperature of 120°C shown in table 1 and a vacuum pressure of -70 cmHg to obtain a biodegradable molded article. The obtained molded article was evaluated for heat resistance at 80°C for 20 minutes, impact resistance (1), impact resistance (2), and moldability (1). The results obtained are shown in Table 1.

(Example 2)

A biodegradable sheet was obtained in the same manner as that in Example 1 except that the blending amounts of polylactic acid resin and biodegradable aliphatic polyester were changed to polylactic acid resin/biodegradable aliphatic polyester = 60 mass%/40 mass%. The polylactic acid resin of the obtained biodegradable sheet had a degree of crystallization of 10% .

Further, using the obtained biodegradable sheet, a molded article was obtained in the same manner as that in Example 1 . The obtained molded article was evaluated in the same manner as that in Example 1. The results obtained are shown in Table 1.

(Example 3)

A biodegradable sheet was obtained in the same manner as that in Example 1 except that the blending amounts of polylactic acid resin and biodegradable aliphatic polyester were changed to polylactic acid resin/biodegradable aliphatic polyester = 50 mass%/50 mass%. The polylactic acid resin of the obtained biodegradable sheet had a degree of crystallization of 8%.

Further, using the obtained biodegradable sheet, a molded article was obtained in the same manner as that in Example 1. The obtained molded article was evaluated in the same manner as that in Example 1. The results obtained are shown in Table 1.

(Example 4)

A biodegradable sheet was obtained in the same manner as that in Example 1 except that the blending amounts of polylactic acid resin and biodegradable aliphatic polyester were changed to polylactic acid resin/biodegradable aliphatic polyester = 40 mass%/60 mass%. The polylactic acid resin of the obtained biodegradable sheet had a degree of crystallization of 10% .

Further, using the obtained biodegradable sheet, a molded article was obtained in the same manner as that in Example 1. The obtained molded article was evaluated in the same manner as that in Example 1. The results obtained are shown in Table 1.

(Example 5)

A biodegradable sheet was obtained in the same manner as that in Example 1 except that polybutyrene adipate terephthalate ("Ecoflex" manufactured by BASF, melting point: 109°C, glass transition temperature: -30°C) was used as a biodegradable aliphatic polyester and the blending amounts of polylactic acid resin and biodegradable aliphatic polyester were changed to polylactic acid resin/biodegradable aliphatic polyester = 70 mass%/30 mass%. The polylactic acid resin of the obtained biodegradable sheet had a degree of crystallization of 8%.

Further, using the obtained biodegradable sheet, a molded article was obtained in the same manner as that in Example 1. The obtained molded article was evaluated in the same manner as that in Example 1. The results obtained are shown in Table 1.

(Example 6)

15 ppm of tin octylate was added to 90 kg of L-Lactide (trade name: PURASORB L) manufactured by Purac Japan Co. and 10 kg of DL-lactide (trade name: PURASORB DL) manufactured by the same company, and the resultant was charged in a 500-L batch type polymerization tank equipped with a stirrer and a heater. The tank was purged with nitrogen and polymerization was performed at 185°C for 60 minutes at an agitation speed of 100 rpm. The obtained melt was fed to a 40 mmϕ unidirectional biaxial extruder equipped with 3 stages of vacuum vent manufactured by Mitsubishi Heavy Industries, Ltd. , and extruded at 200°C into a strand and pelletized while removing volatiles at a vent pressure of 4 Torr. The obtained polylactic acid resin had a weight average molecular weight of 200,000 and a L-form content of 94.8%. The resin had a melting point by DSC of 165°C and a glass transition temperature of 56°C.

The obtained polylactic acid resin and a polybutyrene succinate ("Bionolle 1903", trade name, manufactured by Showa Highpolymer Co., Ltd., melting point: 110°C, glass transition temperature: -40°C) as a biodegragable aliphatic polyester, were mixed in proportions of polylactic acid resin/biodegradable aliphatic polyester = 60 mass%/40 mass% . The resultant was fed to a unidirectional biaxial extruder, melt-kneaded and extruded into a strand, and then cut by a pelletizer to obtain pellets. Subsequently, the obtained pellets were dried at 70°C for 8 hours, fed to a monoaxial extruder, and extruded through a T-die to obtain a 400 μm-thick biodegradable sheet. The polylactic acid resin of the obtained biodegradable sheet had a degree of crystallization of 4%.

Then, using the obtained biodegradable sheet, a molded article was obtained in the same manner as that in Example 1 . The obtained molded article was evaluated in the same manner as that in Example 1. The results obtained are shown in Table 1.

(Example 7)

The molded article obtained in Example 2 was subjected to post-crystallization treatment at 70°C for 8 hours to obtain a post-crystallized molded article. The polylactic acid resin of the obtained molded article had a degree of crystallization of 45%. The obtained molded article was evaluated for heat resistance at 120°C for 20 minutes, impact resistance (1), impact resistance (2), and moldability (1). The results obtained are shown in Table 1.

(Example 8)

The polylactic acid resin obtained in Example 1 and a polybutyrene succinate ("Bionolle 1903", trade name, manufactured by Showa Highpolymer Co., Ltd., melting point: 110°C, glass transition temperature: -40°C) as a biodegragable aliphatic polyester, were mixed in proportions of polylactic acid resin/biodegradable aliphatic polyester = 70 mass%/30 mass%. The resultant was fed to a unidirectional biaxial extruder, melt-kneaded and extruded into a strand, and then cut by a pelletizer to obtain pellets. Subsequently, the obtained pellets were dried at 70°C for 8 hours, fed to a monoaxial extruder, extruded through a T-die, and then made contact a cast roll at 110°C to obtain a 400 μm-thick biodegradable sheet. The polylactic acid resin of the obtained biodegradable sheet had a degree of crystallization of 43%.
Then, using the obtained biodegradable sheet, a molded article was obtained in the same manner as that in Example 1 . The obtained molded article was evaluated in the same manner as that in Example 1. The results obtained are shown in Table 1.

Table 1

| | | | Example 1 | Example 2 | Example 3 | Example 4 | Example 5 | Example 6 | Example 7 | Example 8 |
|---|---|---|---|---|---|---|---|---|---|---|
| Blending ratio(mass%) | | A[*1] | 70 | 60 | 50 | 40 | 70 | 60 | 60 | 70 |
| | | B[*2] | 30 | 40 | 50 | 60 | 30 | 40 | 40 | 30 |
| Degree of Crystallization(%) | | Sheet | 11 | 10 | 8 | 10 | 8 | 4 | 10 | 43 |
| | | Molded article | – | – | – | – | – | – | 45 | – |
| Molding temperature(°C)[*3] | | | 120 | 120 | 120 | 120 | 120 | 120 | 120 | 120 |
| Heat resistance | Volume reduction ratio (%) | | 1.1 | 1.0 | 0.9 | 0.9 | 1.3 | 1.2 | 0.1 | 0.3 |
| Impact resistance (1) (Kgf·mm) | | | 108 | 150 | 230 | 301 | 140 | 162 | 146 | 100 |
| Impact resistance (2) | | | No breakage | No breakage | No breakage | No breakage | No breakage | No breakage | No breakage | No breakage |
| Evaluation of moldability | | | ○ | ○ | ○ | ○ | ○ | ○ | ○ | △ |
| Post-crystallization | | | No | No | No | No | No | No | Yes | No |

Notes) *1    Polylactic acid resin: Glass transition temperature 58°C, melting point 171°C; However polylactic acid resin of Example 6: Glass transition temperature 56°C, melting point 165°C;

    *2    Biodegradable aliphatic polyester: "Bionolle 1903" (glass transition temperature −40°C, melting point 110°C), or "Ecoflex" (glass transition temperature −30°C, melting point 109°C);

    *3    Molding temperature:    Temperature of biodegradable sheet upon molding.

(Example 9)

The 400-µm thick biodegradable sheet obtained in Example 1 and the 400-µm thick biodegradable sheet obtained in Example 8 were also evaluated for moldability (2). That is , each sheet was subjected to vacuum forming (degree of vacuum: -70 cmHg) using a mold having a diameter of 75 mm, a depth of 37.5 mm and a draw ratio of 0.5 (mold temperature 25°C). The obtained molded articles were evaluated for moldability (2). The results obtained are shown in Table 2.

Table 2

|  |  | Example 1 | Example 8 |
|---|---|---|---|
| Blending proportion (mass%) | A*4 | 70 | 70 |
|  | B*5 | 30 | 30 |
| Degree of crystallization (%) | Sheet | 11 | 43 |
| Molding temperature (°C) *3 |  | 120 | 120 |
| Evaluation of moldability |  | ◎ | ○ |
| Post-crystallization |  | No | No |

Notes) *3 Molding temperature: Temperature of biodegradable sheet upon molding;

*4 Polylactic acid resin: Glass transition temperature 58°C, melting point 171°C;

*5 Biodegradable aliphatic polyester: "Bionolle 1903" (glass transition temperature -40°C, melting point 110°C)

(Comparative Example 1)

The polylactic acid resin obtained in Example 1 was fed to a unidirectional biaxial extruder, melt-kneaded and extruded into a strand, and then cut by a pelletizer to obtain pellets. Subsequently, the obtained pellets were dried at 70°C for 8 hours, fed to a monoaxial extruder, and extruded through a T-die to obtain a 400 µm-thick biodegradable sheet. The polylactic acid resin of the obtained biodegradable sheet had a degree of crystallization of 6%.

Then, a molded article was formed using the obtained biodegradable sheet. That is, using a mold having a diameter of 75 mm and a depth of 100 mm (a draw ratio of 1.33) (mold temperature 25°C), vacuum forming was performed under the conditions of a sheet temperature of 80°C shown in Table 2 and a vacuum pressure of -70 cmHg to obtain a biodegradable molded article. The obtained molded article was evaluated in the same manner as that in Example 1. The results obtained are shown in Table 2.

(Comparative Example 2)

A biodegradable sheet was obtained in the same manner as that in Example 1 except that the blending amounts of polylactic acid resin and biodegradable aliphatic polyester were changed to polylactic acid resin/biodegradable aliphatic polyester = 80 mass%/20 mass%. The polylactic acid resin of the obtained biodegradable sheet had a degree of crystallization of 8%.

Further, using the obtained biodegradable sheet, a molded article was obtained in the same manner as that in Example 1 . The obtained molded article was evaluated in the same manner as that in Example 1. The results obtained are shown in Table 3.

Table 3

|  |  | Comparative Example 1 | Comparative Example 2 |
|---|---|---|---|
| Blending proportion (mass%) | A*4 | 100 | 80 |
|  | B*5 | 0 | 20 |
| Degree of crystallization (%) | Sheet | 6 | 8 |
|  | Molded article | - | - |

*4 Polylactic acid resin: Glass transition temperature 58°C, melting point 171°C;

*5 Biodegradable aliphatic polyester: "Bionolle 1903" (glass transition temperature -40°C, melting point 110°C)

Table 3   (continued)

|  |  | Comparative Example 1 | Comparative Example 2 |
|---|---|---|---|
| Molding temperature*3 |  | 80 | 120 |
| Heat resistance | Volume reduction ratio (%) | 99.8 | 10.1 |
| Impact resistance (1) (Kgf-mm) |  | 12 | 150 |
| Impact resistance (2) |  | Cracks | No breakage |
| Evaluation of moldability |  | ○ | ○ |
| Post-crystallization |  | No | No |

Notes) *3 Molding temperature: Temperature of biodegradable sheet upon molding;

Tables 1 and 3 indicate that Examples 1 to 7 were excellent in all of the heat resistance, impact resistance, and moldability and that good molded articles can be obtained by an ordinary molding cycle. In particular, Example 7 showed that the heat resistance was increased due to the effect of post-crystallization, and the heat resistance temperature was higher than the melting point or more of the biodegradable aliphatic polyester. Further, Example 8 were excellent in the heat resistance and impact resistance, and showed moldability on a practically usable level. Note that the sheets obtained in Examples 1 to 8 were biodegradable so that they would cause no environmental problems.

On the other hand, in Comparative Example 1, problems arose in the heat resistance and impact resistance since no biodegradable aliphatic polyester was contained. In Comparative Example 2, the heat resistance was poor due to a decreased blending amount of the biodegradable aliphatic polyester.

Table 2 indicates that when the draw ratio was 0.5, the sheet of Example 1 showed excellent moldability and the sheet of Example 8 showed good moldability. That is, the biodegradable sheets of Examples 1 to 8 of the present invention gave good molded articles so far as the draw ratio was 0.5, and even when the draw ratio was 1.33, molded articles on a practically usable level could be obtained. Of course, excellent molded articles could be obtained when the draw ratio was less than 0.5.

As described in detail, according to the present invention, biodegradable sheets that are biodegradable and exhibit excellent heat resistance, excellent impact resistance and excellent moldability can be provided. Further, When molded articles are formed by using the biodegradable sheets of the present invention, the temperature of mold need not be retained at a temperature near crystallization temperature of polylactic acid resin (80°C to 130°C), and molded articles having heat resistance can be obtained by using molds at room temperature, which makes it possible to perform molding in an ordinary molding cycle. That is, by blending a polylactic acid resin and a specified polyester in predetermined proportions and controlling the degree of crystallization of the polylactic acid resin in the resultant sheet, the problems of the conventional technology, that is, (1) prolonged molding cycle and increased production costs, (2) necessity of installment or the like for heating molds, and so on have been solved. Further, use of the biodegradable sheets of the present invention enables one to perform various forming such as vacuum forming, air pressure forming, vacuum-air pressure forming, and press forming. In particular, even when deep-drawn molded articles and blister molded articles having a complicated shape are formed by using a vacuum forming machine, good molded articles can be obtained. Furthermore, by performing molding under specified conditions, molded articles having excellent heat resistance, excellent impact resistance, and excellent moldability can be provided and post-crystallization of the molded articles under specified conditions can provide molded articles having further increased heat resistance.

INDUSTRIAL APPLICABILITY

The present invention is applicable to food containers, cups and trays for foods, wrapping containers, hot-fill containers, trays and carrier tapes for transporting electronic parts, and so on.

**Claims**

1.    A biodegradable sheet comprising a resin composition, wherein the resin composition containing 75 to 25 mass% of a polylactic acid resin and 25 to 75 mass% of a polyester having a glass transition temperature of 0°C or less and a melting point higher than the glass transition temperature of the polylactic acid resin based on total 100 mass%, wherein the polylactic acid resin in the sheet has a degree of crystallization of 45% or less.

2.    A biodegradable sheet comprising a resin composition , wherein the resin composition containing 75 to 25 mass% of a polylactic acid resin and 25 to 75 mass% of a polyester having a glass transition temperature of 0°C or less and a melting point of 90°C or more, and wherein the polylactic acid resin in the sheet has a degree of crystallization of 45% or less.

3. The biodegradable sheet according to claim 1 or 2, wherein the polylactic acid resin has a degree of crystallization of 20% or less.

4. The biodegradable sheet according to any one of claims 1 to 3, wherein the polyester is a biodegradable aliphatic polyester other than the polylactic acid resin.

5. A biodegradable sheet comprising a resin composition, wherein the resin composition containing 75 to 25 mass% of a polylactic acid resin and 25 to 75 mass% of a polyester having a glass transition temperature of 0°C or less and a melting point higher than the glass transition temperature of the polylactic acid resin based on total 100 mass%, and wherein a molded article molded from the sheet has a volume reduction ratio of 6% or less.

6. A biodegradable sheet for deep-drawing, comprising a resin composition, wherein the resin composition containing 75 to 25 mass% of a polylactic acid resin and 25 to 75 mass% of a polyester having a glass transition temperature of 0°C or less and a melting point higher than the glass transition temperature of the polylactic acid resin based on total 100 mass%, and wherein the polylactic acid resin in the sheet has a degree of crystallization of 45% or less.

7. A molded article molded from a sheet that comprises a resin composition, wherein the resin composition containing 75 to 25 mass% of a polylactic acid resin and 25 to 75 mass% of a polyester having a glass transition temperature of 0°C or less and a melting point higher than the glass transition temperature of the polylactic acid resin based on total 100 mass%, and having a volume reduction ratio of 6% or less.

8. A molded article molded from a biodegradable sheet that comprises a resin composition, wherein the resin composition containing 75 to 25 mass% of a polylactic acid resin and 25 to 75 mass% of a polyester having a glass transition temperature of 0°C or less and a melting point higher than the glass transition temperature of the polylactic acid resin based on total 100 mass%, and wherein the polylactic acid resin in the sheet has a degree of crystallization of 45% or less, at a temperature not lower than a melting point of the polyester and lower than a temperature by 30°C higher than the melting point of the polyester, and having a volume reduction ratio of 6% or less.

9. The molded article according to claim 8, which is molded from a biodegradable sheet that comprises a resin composition, wherein the resin composition containing 75 to 25 mass% of a polylactic acid resin and 25 to 75 mass% of a polyester having a glass transition temperature of 0°C or less and a melting point higher than the glass transition temperature of the polylactic acid resin based on total 100 mass%, and wherein the polylactic acid resin in the sheet has a degree of crystallization of 45% or less, at a temperature not lower than a melting point of the polyester and lower than a temperature by 30°C higher than the melting point of the polyester, and then post-crystallized at a temperature not lower than the glass transition temperature of the polylactic acid resin and lower than the melting point of the polyester, and having a volume reduction ratio of 6% or less.

10. A method for producing a molded article, comprising forming a molded article from a biodegradable sheet that comprises a resin composition, wherein the resin composition containing 75 to 25 mass% of a polylactic acid resin and 25 to 75 mass% of a polyester having a glass transition temperature of 0°C or less and a melting point higher than the glass transition temperature of the polylactic acid resin based on total 100 mass%, and wherein the polylactic acid resin in the sheet has a degree of crystallization of 45% or less, at a temperature not lower than a melting point of the polyester and lower than a temperature by 30°C higher than the melting point of the polyester.

11. The method for producing a molded article according to claim 10, further comprising post-crystallizing the molded article formed from the biodegradable sheet at the molding temperature, at a temperature not lower than the glass transition temperature of the polylactic acid resin and lower than the melting point of the polyester.

## INTERNATIONAL SEARCH REPORT

| | |
|---|---|
| | International application No. |
| | PCT/JP03/08590 |

**A. CLASSIFICATION OF SUBJECT MATTER**
Int.Cl$^7$ C08L67/04

According to International Patent Classification (IPC) or to both national classification and IPC

**B. FIELDS SEARCHED**

Minimum documentation searched (classification system followed by classification symbols)
Int.Cl$^7$ C08L67/00-67/04

Documentation searched other than minimum documentation to the extent that such documents are included in the fields searched
Jitsuyo Shinan Koho              1926–2003    Toroku Jitsuyo Shinan Koho    1994–2003
Kokai Jitsuyo Shinan Koho    1971–2003    Jitsuyo Shinan Toroku Koho    1996–2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | EP 821036 A1 (MITSUI TOATSU CHEMICALS, INC.), 28 January, 1998 (28.01.98), Page 15, lines 3 to 6 & JP 10-87976 A Column 1, lines 2 to 9 & US 5916950 A | 1-11 |
| P,A | JP 2003-147177 A (Mitsubishi Plastics, Inc.), 21 May, 2003 (21.05.03), Column 1, lines 2 to 35 (Family: none) | 1-11 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 July, 2003 (22.07.03) | 05 August, 2003 (05.08.03) |

| Name and mailing address of the ISA/ | Authorized officer |
|---|---|
| Japanese Patent Office | |
| Facsimile No. | Telephone No. |

Form PCT/ISA/210 (second sheet) (July 1998)